# EUROPEAN PATENT APPLICATION

(11) **EP 4 650 237 A1**
(43) Date of publication of application: **19.11.2025**
(21) Application number: 25176941.0
(22) Date of filing: 16.05.2025
(51) Int. Cl.: B60W 10/06, B60W 10/22, B60W 30/182, B60W 50/08, B60W 50/14

(54) **CONTROL SYSTEM OF A VEHICLE**

(30) Priority: 17.05.2024 GB 202407084
(71) Applicant: McLaren Automotive Limited, Woking, Surrey GU21 4YH (GB)
(72) Inventor: Waite, Marcus, Surrey, GU21 4YH (GB); Brown, Rachel, Surrey, GU21 4YH (GB); Swinhoe, Jonathan, Surrey, GU21 4YH (GB)
(74) Representative: Slingsby Partners LLP

(57) **Abstract**

A control system of a vehicle, the vehicle being operable in a first driving mode in which each of one or more sub-systems of the vehicle adopt a respective first configuration, the control system being configured to: receive an input from a positioning system; determine, in dependence on the input, whether the vehicle is located in one of one or more inhibited locations for operation of the vehicle in the first driving mode; and inhibit operation of the vehicle in the first driving mode if it is determined that the vehicle is located in an inhibited location.

## Description

### BACKGROUND

This invention relates to a control system of a vehicle and a method of controlling a vehicle.

A vehicle may comprise one or more adjustable sub-systems that can each adopt a respective plurality of different configurations - e.g. so as to affect the performance of that vehicle. That is, a vehicle may comprise one or more adjustable sub-systems that are each capable of adjusting their geometry (e.g. the relative arrangement of their parts in physical space) - e.g. so as to affect the performance of that vehicle.

For example, a vehicle may comprise an adjustable suspension system. The configuration of the adjustable suspension system may determine the ride height of that vehicle. The performance of a vehicle can be affected by its ride height. For example, this is especially so in examples where a vehicle is designed to generate downforce using "ground-effect aerodynamics" - in which a lower ride height often improves performance.

A vehicle may be operable in a plurality of different driving modes. For example, a vehicle may be operable in a race driving mode and a non-race (e.g. one or more of an "eco", "normal" or "sport" etc.) driving mode.

The one or more adjustable sub-systems of a vehicle may adopt different configurations in different ones of the plurality of driving modes. For example, the suspension system of the vehicle may adopt a non-race configuration in the non-race driving mode and a race configuration in the race driving mode. Owing to the different configurations adopted by the suspension system, the ride height of the vehicle may be lower when that vehicle is operating in the race driving mode than when that vehicle is operating in the non-race driving mode.

The non-race driving mode may be authorized for use on public roads. The race driving mode may not be authorized for use on public roads. For example, in the race driving mode, the race configuration of the suspension system may cause the vehicle to not meet one or more safety standards in order to be certified for use on public roads.

In a simple approach to controlling such a vehicle, a user (e.g. driver) of the vehicle may request operation of the vehicle in the race driving mode. In order to input such a request, the user of the vehicle may be required to declare that the vehicle is not located on a public road (e.g. that the vehicle is located on a racetrack). On receipt of such a request and associated declaration, a control system of the vehicle may cause that vehicle to operate in the race driving mode - e.g. cause the vehicle to operate in a driving mode that is not authorized for use on public roads. This simple approach to controlling such a vehicle is fallible. This is because, using this simple approach, the vehicle could be caused to operate in the race driving mode on a public road - e.g. if the user makes a false declaration that the vehicle is not located on a public road.

An improved control system of a vehicle and method of controlling a vehicle is therefore desirable.

### SUMMARY OF THE INVENTION

According to a first aspect of the present invention there is provided a control system of a vehicle, the vehicle being operable in a first driving mode in which each of one or more sub-systems of the vehicle adopt a respective first configuration, the control system being configured to: receive an input from a positioning system; determine, in dependence on the input, whether the vehicle is located in one of one or more inhibited locations for operation of the vehicle in the first driving mode; and inhibit operation of the vehicle in the first driving mode if it is determined that the vehicle is located in an inhibited location.

The control system may be configured to, when operation of the vehicle in the first driving mode is inhibited, cause the vehicle to continue to operate in a second driving mode in which each of the one or more sub-systems of the vehicle adopt a respective second configuration.

The control system may be configured to: permit operation of the vehicle in the first driving mode if it is determined that the vehicle is not located in one of the one or more inhibited locations.

The control system may be configured to determine that the vehicle is not located in one of the one or more inhibited locations when the input from the positioning system indicates that the vehicle is not located on a public road.

The control system may be configured to determine that the vehicle is not located in one of the one or more inhibited locations by determining that the vehicle is located in one of one or more permitted locations.

The one or more permitted locations may comprise one or more racetracks.

A temporary racetrack may be a permitted location of the one or more permitted locations when that temporary racetrack is configured as a racetrack, the control system may be configured to determine whether a temporary racetrack is configured as a racetrack by determining, in dependence on inputs previously received from the positioning system, whether the vehicle has passed through one or more waypoints en route to that temporary racetrack.

The control system may be configured to, when operation of the vehicle in the first driving mode is permitted and a request for operation of the vehicle in the first driving mode is received, cause each of the one or more sub-systems of the vehicle to adopt its respective first configuration.

The control system may be configured to receive the input from the positioning system whilst the vehicle is operating in a second driving mode in which each of the one or more sub-systems of the vehicle adopt a respective second configuration; and when operation of the vehicle in the first driving mode is permitted and a request for operation of the vehicle in the first driving mode is received, may cause each of the one or more sub-systems of the vehicle to transition from its respective second configuration to its respective first configuration.

The control system may be configured to cause said transition to begin when the speed of the vehicle is less than or equal to a threshold speed.

The threshold speed may be 0 miles per hour.

The control system may be configured to, whilst the vehicle is operating in the first driving mode: receive a second input from the positioning system; determine, in dependence on the second input, that the vehicle is located in one of the one or more inhibited locations; and cause a warning to be issued to a user of the vehicle to encourage the user to request operation of the vehicle in the second driving mode.

The vehicle may also be operable in a second driving mode in which each of the one or more sub-systems of the vehicle adopt a respective second configuration; and the one or more sub-systems of the vehicle may comprise a suspension system of the vehicle, wherein the ride height of the vehicle is lower when the suspension system adopts its first configuration than when the suspension system adopts its second configuration.

The vehicle may also be operable in a second driving mode in which each of the one or more sub-systems of the vehicle adopt a respective second configuration; and the one or more sub-systems may comprise a rear wing system of the vehicle, wherein a rear wing of the rear wing system is positioned in a different position when the rear wing system adopts its first configuration than when the rear wing system adopts its second configuration.

The vehicle may also be operable in a second driving mode in which each of the one or more sub-systems of the vehicle adopt a respective second configuration; and the one or more sub-systems may comprise a rear wing system of the vehicle, wherein a rear wing of the rear wing system is positioned further rearward relative to the primary direction of motion of the vehicle when the rear wing system adopts its first configuration than when the rear wing system adopts its second configuration.

The vehicle may also be operable in a second driving mode in which each of the one or more sub-systems of the vehicle adopt a respective second configuration; and the one or more sub-systems may comprise an exhaust system of the vehicle, wherein one or more moveable valves comprised by the exhaust system permit a greater exhaust gas flow rate through an exhaust gas passage of the exhaust system when the exhaust system adopts its first configuration than when the exhaust system adopts its second configuration.

The vehicle may also be operable in a second driving mode in which each of the one or more sub-systems of the vehicle adopt a respective second configuration; and the one or more sub-systems may comprise a power source control system of the vehicle, wherein the power source control system causes a greater torque demand change for a given change in throttle pedal position when the power source control system adopts its first configuration than when the power source control system adopts its second configuration.

The one or more inhibited locations may comprise any location that is a public road.

The input from the positioning system may be indicative of whether the vehicle is located on a public road.

The first driving mode may not be authorized for use on a public road.

A request for operation of the vehicle in the first driving mode may be received from a user-interface.

The positioning system may comprise one of, or a combination of more than one of: a satellite navigation system; a cellular network positioning system; a wireless network positioning system; a machine vision positioning system; and/or a dead reckoning positioning system.

The satellite navigation system may be configured to receive location signals from satellites comprised by one or more global navigation satellite systems, said one or more global navigation satellite systems comprising one or more of GPS, GLONASS, Galileo and BeiDou.

According to a second aspect of the present invention there is provided a vehicle comprising the control system described herein.

According to a third aspect of the present invention there is provided a method of controlling a vehicle, the vehicle being operable in a first driving mode in which each of one or more sub-systems of the vehicle adopt a respective first configuration, the method comprising: receiving an input from a positioning system; determining, in dependence on the input, whether the vehicle is located in one of one or more inhibited locations for operation of the vehicle in the first driving mode; and inhibiting operation of the vehicle in the first driving mode if it is determined that the vehicle is located in an inhibited location.

### BRIEF DESCRIPTION OF THE DRAWINGS

The present invention will now be described by way of example with reference to the accompanying drawings. In the drawings:
Figure 1 shows a vehicle.
Figure 2A shows a side view of a vehicle operating in a non-race driving mode.
Figure 2B shows a side view of a vehicle operating in a race driving mode.
Figure 3 shows a control system of a vehicle according to the principles described herein.
Figure 4 shows a method of controlling a vehicle according to the principles described herein.

### DETAILED DESCRIPTION OF THE DRAWINGS

The following description is presented to enable any person skilled in the art to make and use the invention, and is provided in the context of a particular application. Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

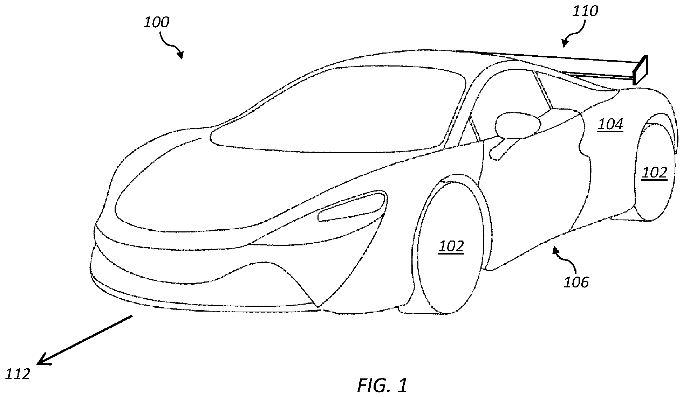

Figure 1 shows a vehicle 100. In Figure 1, vehicle 100 is an automobile (e.g. a car). It is to be understood that the principles described herein could also be applied to vehicles other than automobiles, e.g. to vehicles such as motorbikes, or any other suitable types of vehicle.

The front of vehicle 100 is defined with reference to the primary direction of motion 112 of vehicle 100. Generally, the primary direction of motion of a vehicle is in the forward direction. The front of vehicle 100 points in the primary direction of motion 112 of vehicle 100. It is to be understood that the terms "front", "rear", "forward", "rearward" used herein are defined relative to, or with reference to, the primary direction of motion 112.

Vehicle 100 comprises a user compartment. The user compartment may comprise one or more seats for users of vehicle 100 to sit in. The user compartment may accommodate a driver, and optionally one or more passengers. The driver and optional one or more passengers may be referred to collectively as "users" of vehicle 100. The user compartment may comprise a plurality of user interfaces to enable a user of vehicle 100 to control various aspects of vehicle 100.

Vehicle 100 comprises a plurality of wheels 102. One or more of the plurality of wheels 102 may be driven to rotate using any suitable source of energy - such as combustible fuel (e.g. using an internal combustion engine comprised by vehicle 100), stored electrical energy (e.g. using a battery and one or more e-motors comprised by vehicle 100), a combination of combustible fuel and electrical energy (e.g. using a combination of an internal combustion engine, a battery and one or more e-motors comprised by vehicle 100), and/or any other suitable source(s) of energy.

Vehicle 100 is driven on a driving surface. The driving surface may be, for example, a road, a racetrack, an off-road surface, or any other suitable driving surface. During normal operation, each of the plurality of wheels 102 contacts the driving surface on which vehicle 100 is being driven.

Vehicle 100 comprises a vehicle body 104, which may comprise a chassis and/or monocoque (e.g. "tub"), and one or more body panels. A monocoque is a structural component of a vehicle. A monocoque may be made of a composite material, such as a carbon fibre and resin composite. A monocoque may form part of a chassis. The body panels may be attached to the chassis and/or the monocoque (e.g. "tub"). The body panels may include one or more of bonnet panels, wing panels, occupant door panels, roof panels, underside floor panels and any other suitable types of body panels. Each of these listed example areas of body panels may be formed of one or more body panels.

Vehicle body 104 has an underside 106, which faces the driving surface during normal operation. Underside 106 may comprise any portion of the vehicle body 104 that faces the driving surface during normal operation. The underside 106 of vehicle body 104 may be formed of a portion of the monocoque (e.g. "tub") and/or chassis, and/or a plurality of body panels (e.g. underside floor panels) that together form the underside 106 of vehicle body 104. The distance between the underside 106 of vehicle body 104 and the driving surface on which vehicle 100 is being driven may be termed the "ride height" of vehicle 100.

Vehicle 100 may comprise one or more adjustable sub-systems that can each adopt a respective plurality of different configurations - e.g. so as to affect the performance of vehicle 100, and/or a user's perception of the performance of vehicle 100. That is, vehicle 100 may comprise one or more adjustable sub-systems that are each capable of adjusting their geometry (e.g. the relative arrangement of their parts in physical space) - e.g. so as to affect the performance of vehicle 100, and/or a user's perception of the performance of vehicle 100.

In an example, vehicle 100 comprises a suspension system (not shown in Figure 1). The suspension system may be referred to herein as a sub-system of vehicle 100. Various suitable suspension systems are known to the skilled person - and so, for conciseness, the suspension system will not be described herein in detail. By way of example only, the suspension system may comprise a plurality of suspension mechanisms, each of the plurality of wheels 102 being attached to the vehicle body 104 by a respective suspension mechanism. Each suspension mechanism may comprise one or more suspension struts (e.g. each comprising a spring and/or damper). The suspension system may also comprise an anti-roll mechanism which is connected between the suspension mechanisms to control the reaction of the suspension mechanisms to lateral forces on the vehicle body 104.

The suspension system may be adjustable. That is, the suspension system may be capable of adopting a plurality of different configurations. In other words, the suspension system may be capable of adjusting its geometry (e.g. the relative arrangement of its parts in physical space). For example, each suspension strut may be of adjustable length - e.g. pneumatically, hydraulically or electrically. As would be understood by the skilled person, the configuration of the suspension system (e.g. the length of each of the suspension struts) may determine the ride height of vehicle 100. The performance of vehicle 100 can be affected by its ride height. For example, this is especially so in examples where vehicle 100 is designed to generate downforce using "ground-effect aerodynamics" - in which a lower ride height often improves performance. Conversely, the performance of a vehicle can be affected by its ride height in examples where that vehicle is primarily intended for off-road driving - in which a higher ride height often improves performance. As such, the configuration of the suspension system can affect the performance of vehicle 100.

In another example, vehicle 100 comprises a rear wing system 110. The rear wing system 110 may be referred to herein as a sub-system of vehicle 100. Various suitable rear wing systems are known to the skilled person - and so, for conciseness, rear wing system 110 will not be described herein in detail. By way of example only, rear wing system 110 may comprise a rear wing and one or more arms that attach that rear wing to the vehicle body 104. The rear wing may comprise one or more main plates, and optionally an end plate at either end of said main plate(s).

Rear wing system 110 may be adjustable. That is, rear wing system 110 may be capable of adopting a plurality of different configurations. In other words, rear wing system 110 may be capable of adjusting its geometry (e.g. the relative arrangement of its parts in physical space). For example, the one or more arms that attach the rear wing to the vehicle body 104 may be moveable - e.g. pneumatically, hydraulically or electrically - such that the position of the rear wing relative to the vehicle body 104 can be adjusted. As would be understood by the skilled person, when vehicle 100 is in motion, in certain positions, the rear wing can be used to redirect air flowing over vehicle 100 so as to increase the downforce experienced by vehicle 100 (e.g. during braking and/or cornering), whilst in other positions the rear wing can be used to decrease the downforce experienced by vehicle 100 (e.g. on "straight" driving sections). As such, the configuration of rear wing system 110 can affect the performance of vehicle 100.

In yet another example, vehicle 100 comprises an exhaust system (not shown in Figure 1). Said exhaust system can be used to channel exhaust gases, produced by an internal combustion engine comprised by the vehicle 100, to the surroundings of the vehicle 100. The exhaust system may be referred to herein as a sub-system of vehicle 100. Various suitable exhaust systems are known to the skilled person - and so, for conciseness, the exhaust system will not be described herein in detail.

The exhaust system may be adjustable. That is, the exhaust system may be capable of adopting a plurality of different configurations. In other words, the exhaust system may be capable of adjusting its geometry (e.g. the relative arrangement of its parts in physical space). For example, the exhaust system may comprise an exhaust gas passage (e.g. tube or pipe) that can channel exhaust gases towards an outlet of the exhaust system. That exhaust gas passage may comprise one or more moveable valves. Each moveable valve may be capable of opening, partially closing or closing that exhaust gas passage to the flow of exhaust gases. The presence of said one or more moveable valves can affect the flow of the exhaust gases through the exhaust system towards at least one outlet of the exhaust system. As would be understood by the skilled person, increasing the flow rate of exhaust gases away from an internal combustion engine can increase the performance of that engine. As such, the configuration of the exhaust system can affect the performance of vehicle 100. As the exhaust system also channels engine sounds from the engine to the outlet(s), the said one or more moveable valves can also alter the engine sounds that emanate from the outlet(s). As such, the configuration of the exhaust system can affect a user's perception of the performance of vehicle 100.

It is to be understood that, although not discussed herein in detail for conciseness, vehicle 100 may, alternatively or additionally, comprise one or more other adjustable sub-systems that can each adopt a respective plurality of different configurations (e.g. are each capable of adjusting their geometry) - e.g. so as to affect the performance of vehicle 100. For example, vehicle 100 may alternatively, or additionally, comprise an adjustable front wing system comprising a moveable front wing for affecting aerodynamic (e.g. downforce) changes, and/or an adjustable cooling system comprising one or more moveable cooling vanes for varying the amount of air flow over one or more heat exchangers.

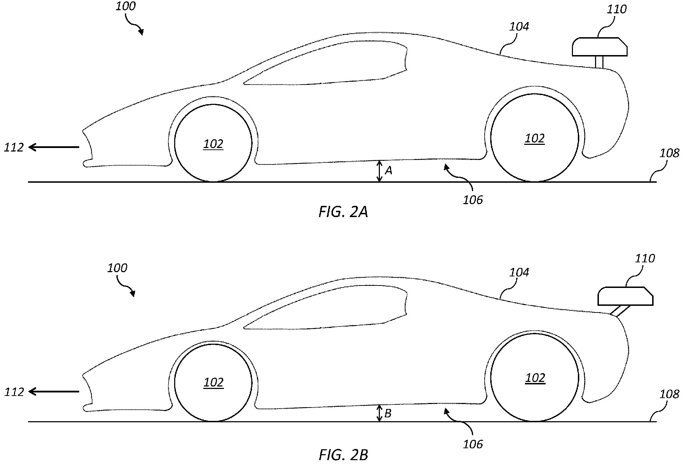

Vehicle 100 may be operable in a plurality of different driving modes. At least one of the one or more adjustable sub-systems of vehicle 100 may adopt different configurations in different ones of the plurality of driving modes. Examples of two driving modes are described herein with reference to Figures 2A and 2B.

Figure 2A shows a side view of vehicle 100 operating in a non-race driving mode. Figure 2B shows a side view of a vehicle 100 operating in a race driving mode. Vehicle 100 shown in Figures 2A and 2B has the same properties as vehicle 100 described herein with reference to Figure 1. For example, in Figures 2A and 2B, vehicle 100 is shown comprising a plurality of wheels 102, vehicle body 104, underside 106, and rear wing system 110 having the same properties as the plurality of wheels 102, vehicle body 104, underside 106, and rear wing system 110 described herein with reference to Figure 1. Vehicle 100 shown in Figures 2A and 2B also comprises a suspension system and an exhaust system having the same properties as the suspension system and the exhaust system described herein with reference to Figure 1. In Figure 2A and 2B, the driving surface is labelled 108. Driving surface 108 has the same properties as the driving surface described herein with reference to Figure 1. The primary direction of motion 112 of vehicle 100, as described herein with reference to Figure 1, is also shown in Figures 2A and 2B.

The non-race driving mode, as shown in Figure 2A, could be named an "eco", "normal" or "sport" driving mode, or any named in any other suitable manner.

In the non-race driving mode shown in Figure 2A, the suspension system of vehicle 100 adopts a non-race configuration. The ride height of vehicle 100 when the suspension system adopts this non-race configuration is labelled "A". For example, ride height "A" may be the ride height of vehicle 100 measured when vehicle 100 is stationary (e.g. has a speed of 0mph, or Okmph) and operating in the non-race driving mode.

In the non-race driving mode shown in Figure 2A, rear wing system 110 of vehicle 100 also adopts a non-race configuration. For example, the configuration of rear wing system 110 shown in Figure 2A may be the configuration of rear wing system 110 when vehicle 100 is stationary (e.g. has a speed of 0mph, or Okmph) and operating in the non-race driving mode.

In the non-race driving mode shown in Figure 2A, the exhaust system of vehicle 100 adopts a non-race configuration. For example, the one or more moveable valves within the exhaust gas passage described herein may fully close, or mostly close, that exhaust gas passage to the flow of exhaust gases. In this way, the one or more moveable valves can block, or restrict, the flow of exhaust gases and engine sounds through said exhaust gas passage. With the one or more moveable valves restricting the flow of exhaust gases in this way, exhaust gases may flow at a restricted flow rate towards an outlet of the exhaust system via the exhaust gas passage described herein, and/or may flow towards an outlet of the exhaust system via an alternative exhaust gas passage. This may be the configuration of the exhaust system when vehicle 100 is stationary (e.g. has a speed of 0mph, or Okmph) and operating in the non-race driving mode. It is to be understood that, when vehicle 100 is operating in the non-race driving mode at increased speeds, said one or more moveable valves may be open further (e.g. permit a greater exhaust gas flow rate via that exhaust gas passage) than when vehicle 100 operating in the non-race driving mode and is stationary.

The non-race driving mode may be authorized for use on public roads. That is, the non-race driving mode may be legally permitted for use on public roads. In other words, in the non-race driving mode, vehicle 100 may meet one or more safety standards in order to be certified for use on public roads.

In examples: the height of the headlights of vehicle 100 when operating in the non-race driving mode at ride height "A" may met or exceed a minimum permitted headlight height for use on public roads; the front of vehicle 100 when operating in the non-race driving mode at ride height "A" may met a required standard for use on public roads for "pedestrian wrap around"; the position of the rear wing in the non-race driving mode may permit a required level of visibility for use on public roads of a centrally mounted rear break-light of vehicle 100; and the engine sound output by the exhaust system in the non-race driving mode may fall below a maximum permitted noise level for use on public roads (e.g. often expressed as a respective maximum permitted decibel level at each of a plurality of different speeds).

A public road is road that is publicly accessible. A public road is any road, street, or right-of-way dedicated or maintained for public use. A public road is any highway and any other road to which the public has access. A public road is any road or street under the jurisdiction of and maintained by a public authority and open to public travel. As a counter example, a racetrack is not a public road - e.g. because it is not open to public travel.

In the race driving mode shown in Figure 2B, the suspension system of vehicle 100 adopts a race configuration. The ride height of vehicle 100 when the suspension system adopts its race configuration is labelled "B". For example, ride height "B" may be the ride height of vehicle 100 measured when vehicle 100 is stationary (e.g. has a speed of 0mph, or Okmph) and operating in the race driving mode. As would be understood by comparing Figure 2A and 2B, ride height "B" shown in Figure 2B is lower than ride height "A" shown in Figure 2A. That is, when vehicle 100 is operating in the race driving mode shown in Figure 2B, the distance between the underside 106 of vehicle body 104 and the driving surface 108 is lesser than the distance between the underside 106 of vehicle body 104 and the driving surface 108 when vehicle 100 is operating in the non-race driving mode shown in Figure 2A. Said lower ride height "B" may improve the performance of vehicle 100 - e.g. especially in examples where vehicle 100 is designed to generate downforce using "ground-effect aerodynamics".

In the race driving mode shown in Figure 2B, the rear wing system 110 of vehicle 100 adopts a race configuration. For example, the configuration of rear wing system 110 shown in Figure 2B may be the configuration of rear wing system 110 when vehicle 100 is stationary (e.g. has a speed of 0mph, or Okmph) and is operating in the race driving mode. A rear wing of the rear wing system may be positioned in a different position when the rear wing system adopts its race configuration than when the rear wing system adopts its non-race configuration. As would be understood by comparing Figure 2A and 2B, the rear wing of the rear wing system 110 is positioned further rearward relative to the primary direction of motion 112 of vehicle 100 when the rear wing system 110 adopts its race configuration shown in Figure 2B than when the rear wing system 110 adopts its non-race configuration shown in Figure 2A. Said further rearward position of the rear wing may improve the performance of vehicle 100 - e.g. by enabling the rear wing to advantageously reduce the drag experienced by vehicle 100 when vehicle 100 is in forward motion.

In the race driving mode shown in Figure 2B, the exhaust system of vehicle 100 adopts a race configuration. For example, the one or more moveable valves within the exhaust gas passage described herein may fully open, or mostly open, that exhaust gas passage to the flow of exhaust gases. In this way, the one or more moveable valves can permit the unrestricted, or minimally restricted, flow of exhaust gases and engine sounds through said exhaust gas passage. This may be the configuration of the exhaust system when vehicle 100 is stationary (e.g. has a speed of 0mph, or Okmph) and operating in the race driving mode. That is, at a given speed (e.g. when vehicle 100 is stationary) the one or more moveable valves described herein may be more open (e.g. permit a greater exhaust gas flow rate through the exhaust gas passage described herein) when the exhaust system adopts its race configuration shown in Figure 2B than when the exhaust system adopts its non-race configuration shown in Figure 2A. This can improve the performance of vehicle 100 by increasing the flow rate of exhaust gases away from its internal combustion engine. Alternatively, or additionally, this can improve the user's perception of the performance of vehicle 100 by causing louder engine sounds to emanate from vehicle 100.

The race driving mode may not be authorized for use on public roads (as defined herein). That is, the race driving mode may not be legally permitted for use on public roads. In other words, in the race driving mode, vehicle 100 may not meet one or more safety standards in order to be certified for use on public roads.

In examples: the height of the headlights of vehicle 100 when operating in the race driving mode at ride height "B" may not met a minimum permitted headlight height for use on public roads; the front of vehicle 100 when operating in the race driving mode at ride height "B" may not met a required standard for use on public roads for "pedestrian wrap around"; the position of the rear wing in in the race driving mode may not permit a required level of visibility for use on public roads of a centrally mounted rear break-light of vehicle 100; and the engine sound output by the exhaust system in the race driving mode may exceed a maximum permitted noise level for use on public roads (e.g. often expressed as a respective maximum permitted decibel level at each of a plurality of different speeds).

In the example shown in Figures 2A and 2B, each of the suspension system, the rear wing system 110 and the exhaust system are adjustable and adopt a respective race configuration when vehicle 100 is operating in the race driving mode. It is to be understood that, in other examples, only any one or two of the suspension system, the rear wing system 110 and the exhaust system may be adjustable and adopt a respective race configuration when vehicle 100 is operating in the race driving mode. In fact, vehicle 100 need not comprise an adjustable suspension system, an adjustable rear wing system 110 and/or an adjustable exhaust system, and instead other adjustable sub-systems of vehicle 100 may adopt respective race configurations when vehicle 100 is operating in a race driving mode - e.g. such as the adjustable front wing system and/or adjustable cooling system described herein.

In a simple approach to controlling vehicle 100, a user (e.g. driver) of vehicle 100 may request operation of vehicle 100 in the race driving mode. For example, the user of vehicle 100 may request operation of vehicle 100 in the race driving mode via a user-interface (e.g. any one or more of a button, switch, dial, touch screen, key fob, mobile phone or computer running a suitable application, etc). In order to input such a request, the user of vehicle 100 may be required to declare or confirm (e.g. via the user interface) that vehicle 100 is not located on a public road (e.g. that the vehicle is located on a racetrack). On receipt of such a request and associated declaration, a control system of vehicle 100 may cause vehicle 100 to operate in the race driving mode - e.g. may cause the suspension system, the rear wing system 110 and the exhaust system to adopt their respective race configurations. In other words, a control system of vehicle 100 may cause vehicle 100 to transition from operation in the non-race driving mode to operation in the race driving mode - e.g. may cause the suspension system, the rear wing system 110 and the exhaust system to transition from their respective non-race configurations to their respective race configurations. That is, the control system of vehicle 100 may cause vehicle 100 to operate in a driving mode that is not authorized for use on public roads. This simple approach to controlling vehicle 100 is fallible. This is because, using this simple approach, vehicle 100 could be caused to operate in the race driving mode on a public road - e.g. if the user makes a false declaration that vehicle 100 is not located on a public road.

Described herein is a control system of a vehicle (e.g. vehicle 100), and a method of controlling a vehicle (e.g. vehicle 100), that are intended to address one or more of the problems identified in the preceding paragraph.

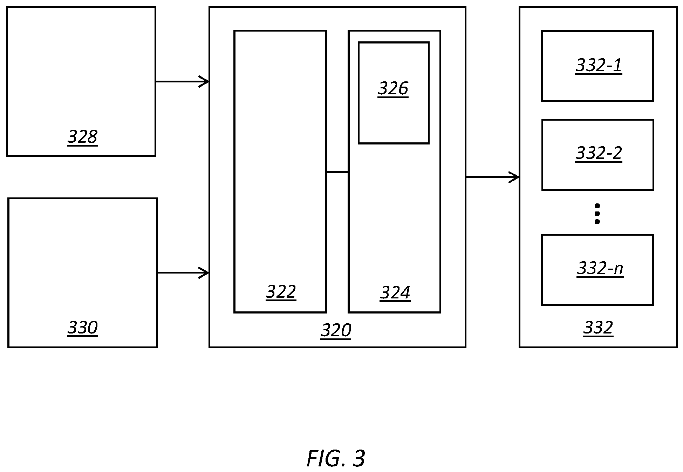

Figure 3 shows a control system 320 of a vehicle (e.g. vehicle 100) according to the principles described herein. Control system 320 may be comprised by vehicle 100 described herein with reference to Figures 1, 2A and 2B.

Control system 320 may comprise a processor 322 and memory 324. Processor 322 may comprise any type of processing unit(s) and/or processing logic - e.g. one or more central processing units (CPUs), one or more graphics processing units (GPUs), one or more portions of fixed function circuitry, a combination of one or more CPUs GPUs and/or fixed function circuitry, and/or any other suitable type or combination of processing unit(s) and/or processing logic. Memory 324 may store, in a non-transient way, software code that can be executed by processor 322 to cause processor 322 to control the vehicle (e.g. vehicle 100) in the manner described herein. In some examples, memory 324 may also store a database 326 of one or more permitted locations for operation of the vehicle (e.g. vehicle 100) in a first driving mode (e.g. the race driving mode described herein).

Control system 320 receives inputs from a positioning system 328. For example, positioning system 328 may comprise one of, or a combination of more than one of: a satellite navigation system; a cellular network (e.g. 5G) positioning system; a wireless network (e.g. WiFi) positioning system; a machine vision positioning system; and/or a dead reckoning positioning system. Positioning system 328 may be comprised by vehicle 100. Said inputs may be indicative of the location of the vehicle (e.g. vehicle 100). For example, as would be understood by the skilled person, a satellite navigation system may comprise a receiver that is configured to receive location signals from a plurality of satellites. Those satellites may be part of one or more navigation satellite systems (e.g. global navigation satellite systems - "GNSS") - such as GPS, GLONASS, Galileo, BeiDou or a combination thereof. As would be understood by the skilled person, a satellite navigation system can use well-known techniques to process the location signals received at its receiver in order to determine the location (e.g. geographical location) of the vehicle (e.g. vehicle 100). As would be understood by the skilled person, a satellite navigation system can also determine whether that location is on a public road (as defined herein) and, if not, attach a flag (e.g. often referred to as an "off-highway" flag) to its respective output to the control system 320. In another example, as would be understood by the skilled person, a cellular network (e.g. 5G) positioning system may comprise a receiver that is configured to receive signals from at least one cellular network (e.g. 5G) transmitter. As would be understood by the skilled person, a cellular network positioning system can use well-known techniques to process the signals received at its receiver in order to determine the location (e.g. geographical location) of the vehicle (e.g. vehicle 100). For example, said techniques may include: assessing the signal strength of signals received from at least one cellular network transmitter in order to assess the distance of the vehicle from that cellular network transmitter; assessing the time-difference-of-arrival (TDOA) of signals received from different cellular network transmitters in order to assess the distance of the vehicle from said different cellular network transmitters and/or assessing the angle-of-arrival (AoA) of each signal in order to determine the direction from which that signal was received. The cellular network transmitter(s) may be in known geographical locations, and so assessments of the distance from and/or direction to said cellular network transmitter(s) can be used to determine the geographical location of the vehicle. In yet another example, as would be understood by the skilled person, a wireless network (e.g. WiFi) positioning system may comprise a receiver that is configured to receive signals from at least one wireless network transmitter (e.g. at least one WiFi router). In this example, if the receiver is receiving a signal from a wireless network transmitter having a known geographical location, a wireless network positioning system can determine that the vehicle is within a certain distance of that geographical location. In a further example, as would be understood by the skilled person, a machine vision positioning system can estimate the location (e.g. geographical location) of a vehicle by assessing images captured by an image capturing device (e.g. camera) attached to the vehicle. The machine vision positioning system may have access to a database comprising a plurality of reference images, each reference image being associated with a geographical location, to which the captured images (or parts thereof) can be compared. In a yet further example, as would be understood by the skilled person, a dead reckoning positioning system can estimate the location (e.g. geographical location) of a vehicle by using a previously determined location (e.g. a geographical location as determined by a satellite navigation system, a cellular network (e.g. 5G) positioning system, machine vision positioning system and/or a wireless network (e.g. WiFi) positioning system) and determining the change in position of the vehicle since that previously determined location was determined - e.g. by assessing the speed and direction of the vehicle during the time elapsed since that previously determined location was determined. In examples where the positioning system 328 comprises more than one of said systems, the positioning system 328 may combine outputs from said systems (e.g. by "averaging" the geographical locations determined by each of said systems), and/or verify the output of a "primary" (e.g. preferred) one of said systems by comparison to the output(s) of one or more other of said systems, in order to provide an input to control system 320 that is indicative of the location of the vehicle.

Control system 320 may also receive inputs from a user interface 330 - e.g. any one or more of a button, switch, dial, touch screen, key fob, mobile phone or computer running a suitable application, etc. User interface 330 may be within the user compartment of vehicle 100 - although this need not be the case. Said inputs from user interface 330 may include requests to operate the vehicle in the first driving mode (e.g. the race driving mode described herein).

Control system 320 controls one or more sub-systems 332 of the vehicle (e.g. vehicle 100). Each of said one or more sub-systems may be capable of adopting a respective plurality of different configurations. That is, each of said one or more sub-systems may be capable of adjusting its geometry. In other words, each of said one or more sub-systems may be capable of adjusting the relative arrangement of its parts in physical space. Each of said one or more sub-systems may be capable of adopting a configuration (e.g. geometry, or relative arrangement of its parts in space) that is not authorized for use on a public road. The suspension system, rear wing system 110 and the exhaust system of vehicle 100 described herein with reference to Figures 1, 2A and 2B are examples of sub-systems 332 shown in Figure 3.

In Figure 3, three sub-systems 332 are shown - labelled as 332-1, 332-2 and 332-n. It is to be understood that control system 320 may control any suitable number of sub-systems 332 of the vehicle (e.g. including just one sub-system 332).

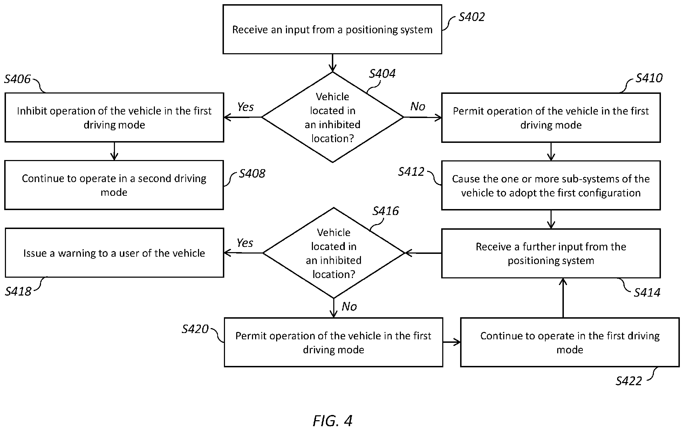

Figure 4 shows a method of controlling a vehicle according to the principles described herein. The vehicle is operable in a first driving mode (e.g. the race driving mode described herein) in which each of one or more sub-systems of the vehicle adopt a respective first configuration (e.g. a respective race configuration as descried herein). In other words, the vehicle is operable in a first driving mode (e.g. the race driving mode described herein) in which each of one or more sub-systems of the vehicle adopt a respective geometry. Put another way, the vehicle is operable in a first driving mode (e.g. the race driving mode described herein) in which each of one or more sub-systems of the vehicle adopt a respective relative arrangement of its parts in space. That is, the method shown in Figure 4 may be used to control vehicle 100 described herein with reference to Figures 1, 2A and 2B. Control system 320 described herein with reference to Figure 3 may be configured to perform the method shown in Figure 4.

In step S402, an input is received from a positioning system. Control system 320 described herein with reference to Figure 3 may be configured to receive said input. Control system 320 may receive said input from positioning system 328 (e.g. comprising a satellite navigation system) described herein with reference to Figure 3.

The input from the positioning system may be indicative of the location of the vehicle. The input from the positioning system may be indicative of a geographical location of the vehicle (e.g. a latitude and longitude coordinate position). Alternatively, or additionally, the input from the positioning system may be indicative of whether the vehicle is located on a public road. For example, the input from the positioning system may comprise a flag that indicates that the vehicle is not located on a public road. Said flag can be referred to as an "off-highway" flag.

In step S404, it is determined, in dependence on the input from the positioning system, whether the vehicle is located in one of one or more inhibited locations for operation of the vehicle in the first driving mode (e.g. the race driving mode described herein). Control system 320 described herein with reference to Figure 3 may be configured to perform step S404.

As described herein, the first driving mode (e.g. the race driving mode described herein) may not be authorised for use on public roads.

In a first example, the one or more inhibited locations for operation of the vehicle in the first driving mode may comprise any location that is a public road (as defined herein). That is, the one or more inhibited locations for operation of the vehicle in the first driving mode may comprise all locations that are public roads (as defined herein). In this first example, in step S404, it may be determined that the vehicle is not located in one of the one or more inhibited locations when the input from the positioning system indicates that the vehicle is not located on a public road (e.g. when the input incudes an "off-highway" flag). Alternatively, it may be determined that the vehicle is located in one of the one or more inhibited locations when the input from the positioning system indicates that the vehicle is located on a public road (e.g. when the input does not include an "off-highway" flag).

In a second example, the input from the positioning system may indicate the geographical location of the vehicle (e.g. a latitude and longitude coordinate position of the vehicle). A database comprising one or more permitted locations for operation of the vehicle in the first driving mode may be accessed. Said database may be stored in memory comprised by the control system (e.g. memory 324 of control system 320). Alternatively, or additionally, said database may be stored remotely from the control system - e.g. in "cloud-based" memory assessable by the control system via a network. The one or more permitted locations may comprise one or more racetracks (e.g. Spa-Francorchamps, The Autodromo Nazionale Monza, Silverstone, Interlagos, Circuit of the Americas etc.). The database may store a set of geographical locations (e.g. ranges of latitude and longitude coordinate positions) associated each of with the one or more permitted locations. In this second example, in step S404, it may be determined that the vehicle is not located in one of the one or more inhibited locations by determining that the vehicle is located in one of one or more permitted locations (e.g. that the indicated geographical location of the vehicle matches a permitted geographical location stored in the database). Alternatively, it may be determined that that the vehicle is located in one of the one or more inhibited locations by determining that the vehicle is not located in one of one or more permitted locations (e.g. that the indicated geographical location of the vehicle does not match any of the permitted geographical locations stored in the database).

The one or more permitted locations may comprise one or more temporary racetracks. A temporary racetrack may be a permitted location of the one or more permitted locations when that temporary racetrack is configured as a racetrack. For example, "street-circuits" such as the Circuit de Monaco and the Marina Bay Street Circuit may be configured as racetracks for a certain number of days, weeks or months during a year, but otherwise comprise a set of public roads. In order to determine whether a temporary racetrack is configured as a racetrack, it may be determined, in dependence on inputs previously received from the positioning system, whether the vehicle has passed through one or more waypoints (e.g. geographical waypoints) en route to its current location at that temporary racetrack. Control system 320 described herein with reference to Figure 3 may be configured to perform that determination. For example, when the Circuit de Monaco is configured as a racetrack, vehicles can access the "Sainte Devote" to "Beau Rivage" straight of that racetrack via a "pitlane". It may be known that the pitlane is not accessible to vehicles other than when the Circuit de Monaco is configured as a racetrack. Thus, if it can be determined from the inputs previously received from the positioning system that the vehicle has passed through one or more waypoints located in the pitlane en route to its current location on the "Sainte Devote" to "Beau Rivage" straight, then in can be determined that the Circuit de Monaco is configured as a racetrack - and thereby a permitted location for operation of the vehicle in the first driving mode.

The first and second examples may be combined, e.g. so as to perform a "two-step authentication" of the vehicle's location. For example, in step S404, it may be determined that the vehicle is located in one of the one or more inhibited locations when, either: (1) the input from the positioning system indicates that the vehicle is located on a public road (e.g. when the input does not include an "off-highway" flag); or (2) the input from the positioning system indicates a geographical location of the vehicle that does not match any of the permitted geographical locations stored in the database. In this combined example, it may only be determined that the vehicle is not located in one of the one or more inhibited locations when, both: (1) the input from the positioning system indicates that the vehicle is not located on a public road (e.g. when the input includes an "off-highway" flag); and (2) the input from the positioning system indicates a geographical location of the vehicle that matches a permitted geographical location stored in the database.

Steps S402 and S404 of the method shown in Figure 4 may be performed in response to receiving a request (e.g. via user interface 330) for operation of the vehicle in the first driving mode. Alternatively, or additionally, steps S402 and S404 of the method shown in Figure 4 may be performed periodically (e.g. according to a predetermined frequency) - e.g. such that the user interface 330 is only usable (e.g. able to be used to submit such a request) when the vehicle is not located in an inhibited location.

If it is determined in step S404 that the vehicle is located in an inhibited location, in step S406, operation of the vehicle in the first driving mode is inhibited (e.g. prevented, or not allowed). That is, in response to determining in step S404 that the vehicle is located in an inhibited location, in step S406, operation of the vehicle in the first driving mode is inhibited. Control system 320 described herein with reference to Figure 3 may be configured to perform step S406.

A control system configured to perform steps S402, S404 and S406 can advantageously prevent a vehicle that is located on a public road from operating in a driving mode (e.g. a race driving mode as described herein) that is not authorised for use on public roads. That is, a control system configured to perform these steps can prevent the use of a race driving mode as described herein in an inappropriate location. Such a control system does not rely on a user declaration that the vehicle is not located on a public road - and so is not fallible in the same way as the simple approach described herein.

When, in step S406, operation of the vehicle in the first driving mode (e.g. the race driving mode described herein) is inhibited, the vehicle may be caused, in step S408, to continue to operate in a second driving mode (e.g. the non-race driving mode described herein) in which each of the one or more sub-systems of the vehicle adopt a respective second configuration (e.g. a respective non-race configuration as described herein). Control system 320 described herein with reference to Figure 3 may be configured to perform step S408.

Returning to step S404, if it is determined that the vehicle is not located in one of the one or more inhibited locations, in step S410, operation of the vehicle in the first driving mode is permitted (e.g. allowed, or not prevented). That is, in response to determining in step S404 that the vehicle is not located in an inhibited location, in step S410, operation of the vehicle in the first driving mode is permitted. Control system 320 described herein with reference to Figure 3 may be configured to perform step S410.

When, in step S410, operation of the vehicle in the first driving mode (e.g. the race driving mode described herein) is permitted, and a request for operation of the vehicle in the first driving mode is received (e.g. via user interface 330), the vehicle may be caused, in step S412, to operate in the first driving mode (e.g. the race driving mode described herein). That is, each of the one or more sub-systems of the vehicle can be caused to adopt its respective first configuration (e.g. its respective race configuration as described herein). More specifically, in step S412, the vehicle may be caused to transition from operation in a second driving mode (e.g. the non-race driving mode described herein) to operation in the first driving mode (e.g. the race driving mode described herein). That is, each of the one or more sub-systems of the vehicle may be caused to transition from its respective second configuration (e.g. its respective non-race configuration) to its respective first configuration (e.g. its respective race configuration). Said transition may begin when the speed of the vehicle is less than or equal to a threshold speed. The threshold speed may be any suitable speed. For example, the threshold speed may be 0 miles per hour (i.e. 0 kilometres per hour). That is, for safety reasons, the transition from the non-race driving mode to the race driving mode may only begin when the vehicle is stationary. Control system 320 described herein with reference to Figure 3 may be configured to perform step S412.

In step S412, in addition to causing each of the one or more sub-systems of the vehicle to adopt its respective first configuration, one or more manual adjustments may be suggested to the user of the vehicle (e.g. via the user interface). In an example, it may be suggested to the user to remove the numberplate(s) of the vehicle to improve the airflow about the vehicle. In another example, one or more damper setting changes may be suggested to the user. The user can optionally act of any one or more of these manual adjustment suggestions in order to further optimise the vehicle for operation in the first the first driving mode (e.g. the race driving mode described herein).

In step S414, a second input may be received from the positioning system whilst the vehicle is operating in the first driving mode (e.g. the race driving mode described herein). Step S414 may be performed in the same manner as step S402 described herein. Control system 320 described herein with reference to Figure 3 may be configured to perform step S414.

In step S416, it is determined, in dependence on the second input from the positioning system, whether the vehicle is located in one of one or more inhibited locations for operation of the vehicle in the first driving mode. Step S416 may be performed in the same manner as step S404 described herein. Control system 320 described herein with reference to Figure 3 may be configured to perform step S416.

If, in step S416, it is determined that the vehicle is located in one of the one or more inhibited locations whilst it is operating in the first driving mode, in step S418, a warning can be issued to a user of the vehicle to encourage the user (e.g. driver) to request operation of the vehicle in the second driving mode. The warning may occur within the user compartment of the vehicle. In examples, said warning may be an audible warning, a visual warning, a haptic warning, or any suitable combination of said types of warning. For example, the warning may be akin to a "seatbelt" warning that encourages a user to plug their seatbelt in whilst a vehicle is moving. That is, the vehicle may not automatically stop operating in the first driving mode, or automatically transition to operation in the second driving mode, when it enters an inhibited location. This could be dangerous, as an automatic driving mode change could cause the performance characteristics (e.g. handling) of the vehicle to suddenly and unexpectedly change. Instead, the warning is intended to notify the user that they have entered an inhibited location, and thereby encourage the user to request that the vehicle transition to operation in another driving mode (e.g. the non-race driving mode described herein). Control system 320 described herein with reference to Figure 3 may be configured to perform step S418. The user can also be prompted to "undo" any manual adjustments that were made in response to the suggestion(s) provided in step S412.

Returning to step S416, if it is determined that the vehicle is not located in one of the one or more inhibited locations, in step S420, operation of the vehicle in the first driving mode is permitted (e.g. allowed, or not prevented). Step S420 may be performed in the same manner as step S410 described herein. When, in step S420, operation of the vehicle in the first driving mode (e.g. the race driving mode described herein) is permitted, the vehicle may be caused, in step S422, to continue to operate in the first driving mode (e.g. the race driving mode described herein). Control system 320 described herein with reference to Figure 3 may be configured to perform steps S420 and S422.

Whilst operating in the first driving mode (e.g. the race driving mode described herein) steps S414, S416, S420, S422 may be repeated until the vehicle is determined in step S416 to be located in an inhibited location.

The suspension system, rear wing system 110 and the exhaust system of vehicle 100 described herein with reference to Figures 1, 2A and 2B are examples of sub-systems 332 shown in Figure 3. Each of these example sub-systems is capable of adopting a plurality of different physical configurations as described herein. In other words, each of these example sub-systems is capable of adjusting its geometry (e.g. the relative arrangement of its parts in physical space). Further, each of these example sub-systems is capable of adopting a race configuration that is not authorized for use on public roads. It is to be understood that this need not be the case. That is, according to the principles described herein, the plurality of different configurations adopted by each of the one or more sub-systems 332 need not be physical configurations, and/or the race configuration of at least one of the one or more sub-systems 332 could be authorized for use on public roads. For example, vehicle 100 may comprise a power source control system (not shown in Figure 1) that is capable of adopting a plurality of different software configurations. Said power source control system may be referred to herein as a sub-system of vehicle 100. That is, the one or more sub-systems 332 shown in Figure 3 may comprise the power source control system of vehicle 100. The power source control system may calculate torque demands for the power unit (e.g. internal combustion engine and/or battery and e-motors of vehicle 100) in dependence on inputs received from the throttle (e.g. throttle pedal positions) and a software throttle map. For example, the software throttle map may be a function that maps (e.g. converts) each throttle position to a corresponding torque demand for the power unit. In its non-race configuration, the power source control system may calculate torque demands in dependence on a non-race software throttle map. In its race configuration, the power source control system may calculate torque demands in dependence on a race software throttle map. The race software throttle map may be "more sensitive" to throttle pedal position changes than the non-race software throttle map. That is, the race software throttle map may cause a greater torque demand change for a given change in throttle pedal position than the non-race software throttle map. In this way, the race configuration of the power source control system can improve the performance of the vehicle 100. The race configuration of the power source control system may be authorized for use on public roads. That said, for example, a user (e.g. driver) may perceive the race configuration of the power source control system to be too sensitive to throttle pedal position changes to comfortably use it on public roads.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. A control system of a vehicle, the vehicle being operable in a first driving mode in which each of one or more sub-systems of the vehicle adopt a respective first configuration, the control system being configured to:
receive an input from a positioning system;
determine, in dependence on the input, whether the vehicle is located in one of one or more inhibited locations for operation of the vehicle in the first driving mode; and
inhibit operation of the vehicle in the first driving mode if it is determined that the vehicle is located in an inhibited location.

2. The control system of claim 1, the control system being configured to, when operation of the vehicle in the first driving mode is inhibited, cause the vehicle to continue to operate in a second driving mode in which each of the one or more sub-systems of the vehicle adopt a respective second configuration.

3. The control system of claim 1 or 2, the control system being configured to:
permit operation of the vehicle in the first driving mode if it is determined that the vehicle is not located in one of the one or more inhibited locations.

4. The control system of claim 3, wherein the control system is configured to determine that the vehicle is not located in one of the one or more inhibited locations when the input from the positioning system indicates that the vehicle is not located on a public road.

5. The control system of claim 3, wherein the control system is configured to determine that the vehicle is not located in one of the one or more inhibited locations by determining that the vehicle is located in one of one or more permitted locations.

6. The control system of claim 5, wherein a temporary racetrack is a permitted location of the one or more permitted locations when that temporary racetrack is configured as a racetrack, the control system being configured to determine whether a temporary racetrack is configured as a racetrack by determining, in dependence on inputs previously received from the positioning system, whether the vehicle has passed through one or more waypoints en route to that temporary racetrack.

7. The control system of any of claims 3 to 6, in which:
the control system is configured to receive the input from the positioning system whilst the vehicle is operating in a second driving mode in which each of the one or more sub-systems of the vehicle adopt a respective second configuration; and
when operation of the vehicle in the first driving mode is permitted and a request for operation of the vehicle in the first driving mode is received, cause each of the one or more sub-systems of the vehicle to transition from its respective second configuration to its respective first configuration.

8. The control system of claim 7, the control system being configured to cause said transition to begin when the speed of the vehicle is less than or equal to a threshold speed, optionally wherein the threshold speed is 0 miles per hour.

9. The control system of any of claims7 or 8, the control system being configured to, whilst the vehicle is operating in the first driving mode:
receive a second input from the positioning system;
determine, in dependence on the second input, that the vehicle is located in one of the one or more inhibited locations; and
cause a warning to be issued to a user of the vehicle to encourage the user to request operation of the vehicle in the second driving mode.

10. The control system of any preceding claim, in which:
the vehicle is also operable in a second driving mode in which each of the one or more sub-systems of the vehicle adopt a respective second configuration; and
the one or more sub-systems of the vehicle comprise:
a suspension system of the vehicle, wherein the ride height of the vehicle is lower when the suspension system adopts its first configuration than when the suspension system adopts its second configuration;
an exhaust system of the vehicle, wherein one or more moveable valves comprised by the exhaust system permit a greater exhaust gas flow rate through an exhaust gas passage of the exhaust system when the exhaust system adopts its first configuration than when the exhaust system adopts its second configuration; and/or
a power source control system of the vehicle, wherein the power source control system causes a greater torque demand change for a given change in throttle pedal position when the power source control system adopts its first configuration than when the power source control system adopts its second configuration.

11. The control system of any preceding claim, in which:
the vehicle is also operable in a second driving mode in which each of the one or more sub-systems of the vehicle adopt a respective second configuration; and
the one or more sub-systems comprise a rear wing system of the vehicle, wherein a rear wing of the rear wing system is positioned in a different position when the rear wing system adopts its first configuration than when the rear wing system adopts its second configuration, optionally wherein a rear wing of the rear wing system is positioned further rearward relative to the primary direction of motion of the vehicle when the rear wing system adopts its first configuration than when the rear wing system adopts its second configuration.

12. The control system of any preceding claim, wherein the input from the positioning system is indicative of whether the vehicle is located on a public road.

13. The control system of any preceding claim, wherein the positioning system comprises one of, or a combination of more than one of: a satellite navigation system; a cellular network positioning system; a wireless network positioning system; a machine vision positioning system; and/or a dead reckoning positioning system, optionally wherein the satellite navigation system is configured to receive location signals from satellites comprised by one or more global navigation satellite systems, said one or more global navigation satellite systems comprising one or more of GPS, GLONASS, Galileo and BeiDou.

14. A vehicle comprising the control system of any preceding claim.

15. A method of controlling a vehicle, the vehicle being operable in a first driving mode in which each of one or more sub-systems of the vehicle adopt a respective first configuration, the method comprising:
receiving an input from a positioning system;
determining, in dependence on the input, whether the vehicle is located in one of one or more inhibited locations for operation of the vehicle in the first driving mode; and
inhibiting operation of the vehicle in the first driving mode if it is determined that the vehicle is located in an inhibited location.
